# EUROPEAN PATENT APPLICATION

(11) **EP 3 056 590 A1**
(43) Date of publication of application: **17.08.2016**
(21) Application number: 16155992.7
(22) Date of filing: 16.02.2016
(51) Int. Cl.: C25D 3/56, C25D 15/00, F01D 5/00, F01D 9/04

(54) **BLADE RESTORATION USING SHROUD PLATING AND OBTAINED PRODUCT**

(30) Priority: 16.02.2015 US 201514623344
(71) Applicant: United Technologies Corporation, Farmington, CT 06032 (US)
(72) Inventor: BISCHOF, Christopher J., Southlake, Texas 76092 (US); STRATTON, Eric W., Mansfield, Texas 76063 (US); MINOR, Michael J., Arlington, Texas 76018 (US)
(74) Representative: Gittins, Alex Michael

(57) **Abstract**

Aspects of the disclosure are directed to applying a plating solution to a base material of a notch 210 associated with a shroud section 208-1 of a turbine blade 206, and applying an electrical signal to the plating solution to cause a deposition of material onto the base material to form a composite.

## Description

### BACKGROUND

Surfaces (e.g., hardface notch surfaces) of shrouded turbine blades have the potential to wear during engine operation. In order to maintain such blades in service, or to restore such blades following maintenance, very strict tolerances need to be adhered to in order to ensure operability and performance. In order to machine the surfaces to such tolerances, a machining fixture locates/positions onto the blade's outer shroud faces. These outer shroud locating faces can wear during engine operation and can lose dimension/material during cleaning and coating strip operations. Conventional techniques to restore these shroud faces include subjecting the shroud faces to a tungsten inert gas (TIG) welding, a plasma welding, or a laser welding. However, the application of such techniques can lead to Heat Affected Zone (HAZ) cracks in a base material of the blade.

### BRIEF SUMMARY

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

Aspects of the disclosure are directed to a method comprising: applying a plating solution to a base material of a notch associated with a shroud section of a turbine blade, and applying an electrical signal to the plating solution to cause a deposition of material onto the base material to form a composite. In some embodiments, the notch is substantially z-shaped. In some embodiments, the notch is composed of a center segment and two outer segments. In some embodiments, the solution comprises a nickel-cobalt matrix. In some embodiments, the solution comprises a powder. In some embodiments, the powder is less than twenty-two microns in dimension. In some embodiments, the powder is of the base material. In some embodiments, the method further comprises applying a source of heat to the composite to facilitate diffusion binding to the base material. In some embodiments, the method further comprises applying a coating to the turbine blade. In some embodiments, the method is performed as part of a scheduled engine service. In some embodiments, the method is performed to restore material associated with the notch due to wear. In some embodiments, less than 0.020 inches (0.05 cm) of material is deposited onto the base material. In some embodiments, the turbine blade is associated with a low pressure turbine section of a turbine of an aircraft engine.

Aspects of the disclosure are directed to a shroud section associated with a turbine blade, comprising: a composite material deposited onto a base material of a notch of the shroud section based on an application of an electrical signal to a plating solution. In some embodiments, the notch is substantially z-shaped. In some embodiments, the notch is composed of a center segment and two outer segments. In some embodiments, the solution comprises a nickel-cobalt matrix. In some embodiments, the solution comprises a powder. In some embodiments, the powder is less than twenty-two microns in dimension. In some embodiments, the powder is of the base material.

### BRIEF DESCRIPTION OF THE DRAWINGS

The present disclosure is illustrated by way of example and not limited in the accompanying figures in which like reference numerals indicate similar elements.
FIG. 1 is a side cutaway illustration of a geared turbine engine.
FIG. 2 illustrates an exemplary blade assembly.
FIG. 3 illustrates a portion of a shroud associated with the assembly of FIG. 2.
FIG. 4 illustrates a flow chart of an exemplary method for restoring a blade or shroud.

### DETAILED DESCRIPTION

It is noted that various connections are set forth between elements in the following description and in the drawings (the contents of which are included in this disclosure by way of reference). It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities.

In accordance with various aspects of the disclosure, apparatuses, systems and methods are described for restoring a blade using a plating technique. In some embodiments, a thick plating is used, potentially instead of welding, to build-up shroud surfaces that can be machined to close tolerances. The build-up of plating may be equal to, or less than, approximately .020 inches (approximately 0.50 millimeters).

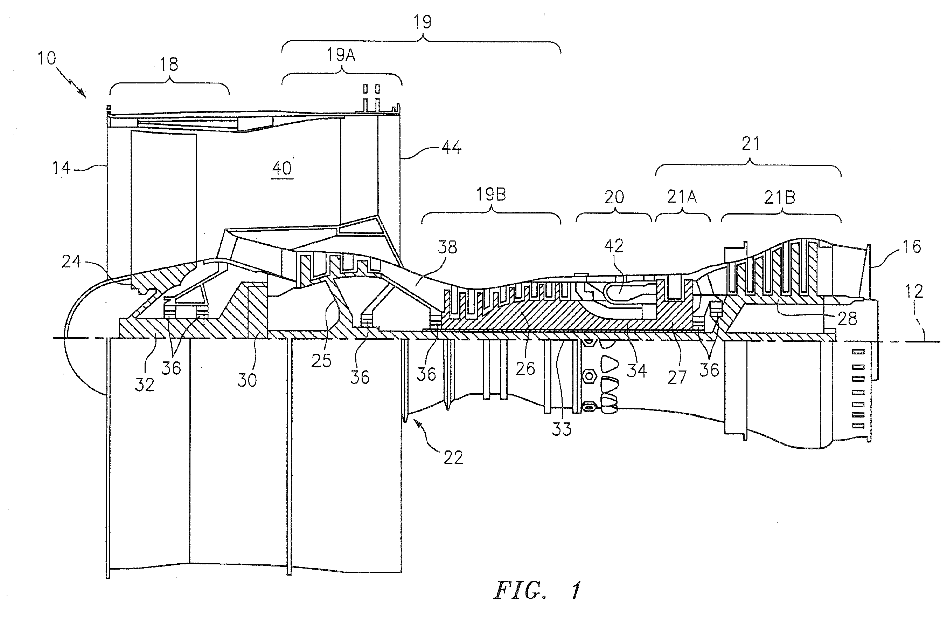

FIG. 1 is a side cutaway illustration of a geared turbine engine 10. This turbine engine 10 extends along an axial centerline 12 between an upstream airflow inlet 14 and a downstream airflow exhaust 16. The turbine engine 10 includes a fan section 18, a compressor section 19, a combustor section 20 and a turbine section 21. The compressor section 19 includes a low pressure compressor (LPC) section 19A and a high pressure compressor (HPC) section 19B. The turbine section 21 includes a high pressure turbine (HPT) section 21A and a low pressure turbine (LPT) section 21B.

The engine sections 18-21 are arranged sequentially along the centerline 12 within an engine housing 22. Each of the engine sections 18-19B, 21A and 21B includes a respective rotor 24-28. Each of these rotors 24-28 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The fan rotor 24 is connected to a gear train 30, for example, through a fan shaft 32. The gear train 30 and the LPC rotor 25 are connected to and driven by the LPT rotor 28 through a low speed shaft 33. The HPC rotor 26 is connected to and driven by the HPT rotor 27 through a high speed shaft 34. The shafts 32-34 are rotatably supported by a plurality of bearings 36; e.g., rolling element and/or thrust bearings. Each of these bearings 36 is connected to the engine housing 22 by at least one stationary structure such as, for example, an annular support strut.

During operation, air enters the turbine engine 10 through the airflow inlet 14, and is directed through the fan section 18 and into a core gas path 38 and a bypass gas path 40. The air within the core gas path 38 may be referred to as "core air". The air within the bypass gas path 40 may be referred to as "bypass air". The core air is directed through the engine sections 19-21, and exits the turbine engine 10 through the airflow exhaust 16 to provide forward engine thrust. Within the combustor section 20, fuel is injected into a combustion chamber 42 and mixed with compressed core air. This fuel-core air mixture is ignited to power the turbine engine 10. The bypass air is directed through the bypass gas path 40 and out of the turbine engine 10 through a bypass nozzle 44 to provide additional forward engine thrust. This additional forward engine thrust may account for a majority (e.g., more than 70 percent) of total engine thrust. Alternatively, at least some of the bypass air may be directed out of the turbine engine 10 through a thrust reverser to provide reverse engine thrust.

The engine 10 is illustrative. Aspects of the disclosure may be applied in connection with other engine types or configurations.

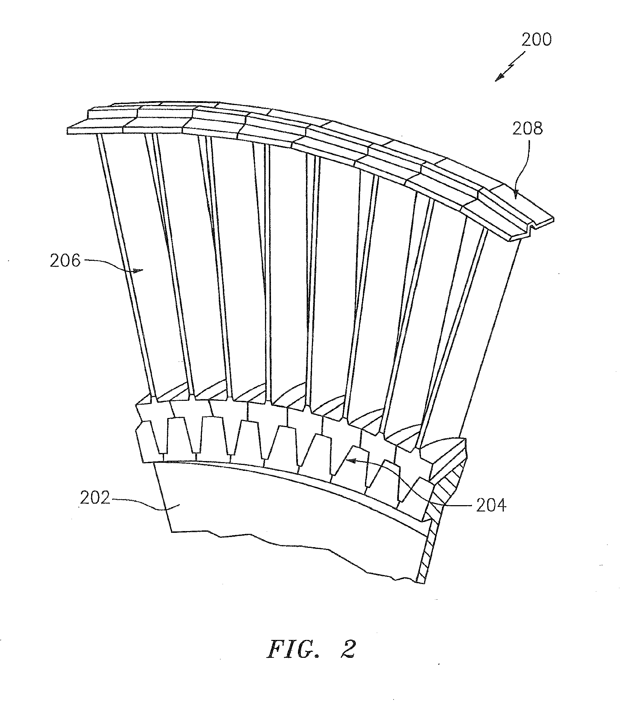

Referring now to FIG. 2, an example of a blade system assembly 200 is shown. The assembly 200 may be applied in connection with one or more of the components or devices of the engine 10 of FIG. 1. For example, the assembly 200 may be applied in connection with the turbine section 21.

The assembly includes a disk 202, a base 204, a plurality of blades 206, and a shroud 208. The disk 202 may be a statically or dynamically balanced unit comprised of one or more materials, such as for example steel, chromium, nickel, or cobalt, or alloys thereof. The blades 206 may be attached to the disk 202 via a "fir tree" design geometry incorporated in the base 204 to allow for different rates of expansion between the disk 202 and the blades 206, while still holding/retaining the blades 206 when the assembly 200 (e.g., the blades 206) is subjected to loading. The shroud 208 may form a band around the perimeter of the turbine section 21 and may help to minimize/reduce blade 206 vibrations. The shroud 208 may enhance airflow characteristics and increase the efficiency of the turbine section 21. The shroud 208 may serve to minimize/reduce leakage around the tips of the blades 206.

The assembly 200 is illustrative. In accordance with aspects of the disclosure, different types or configurations of blade assemblies may be used. Moreover, while eight blades 206 are shown, embodiments may include a different number of blades. For example, embodiments may include, e.g., one-hundred fifty blades 206.

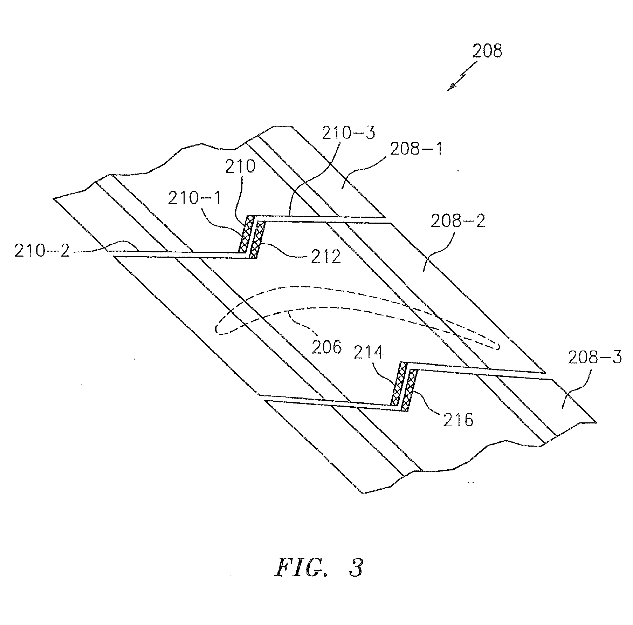

A portion of the shroud 208 (associated with the blades 206) is shown in FIG. 3. As shown in FIG. 3, the shroud may be composed of one or more sections, such as for example sections 208-1 through 208-3. A given section (e.g., the section 208-2) may be associated with a given blade 206.

The sections 208-1 through 208-3 may be manufactured to include a notch, such as notches 210 through 216. As shown in FIG. 3, the notches 210-216 may be substantially z-shaped, composed of a center segment (e.g., segment 210-1) and two outer segments (e.g., segments 210-2 and 210-3). The notch 210 may overlap/mesh with the notch 212. Similarly, the notch 214 may overlap/mesh with the notch 216. This overlapping/meshing between notches may create a substantially continuous shroud 208 when the assembly 200 is fabricated/manufactured.

The surfaces of the notches, and for example the center-segments of the z-shaped notches 210-216 (e.g., the center segment 210-1), may include a hardface that may be subject to wear during use/operation of the engine 10. Given the large number of blades 206 and shroud sections (e.g., sections 208-1 through 208-3) that are used, tight/narrow tolerances associated with the geometries of the notches 210-216 may need to be maintained in order to ensure proper or efficient engine operation/performance. Otherwise, if tight tolerances are not maintained then the multiplicative effects associated with using a large number of blades 206 may significantly degrade the engine performance.

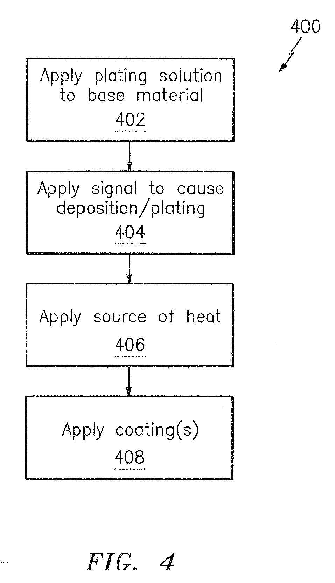

Referring now to FIG. 4, a flow chart of a method 400 is shown. The method 400 may be used to restore a blade 206 and/or a shroud 208 to service. For example, the method 400 may be executed in order to restore notch surfaces to a state acceptable for use following wear.

In step 402, an application of a plating solution (e.g., a nickel-cobalt matrix) to a base material (e.g., a base material associated with a blade 206 or shroud 208, such as a nickel alloy) may be provided. The solution may include a fine (e.g., less than twenty-two microns in size/dimension) powder of, e.g., the base material. Application of a signal (e.g., an electric current) to the solution in step 404 may (ultimately) cause a deposition or plating of material (e.g., the powder) onto the base material, thereby serving to restore any of the base material that may be absent due to the wear described above. Performance of the steps 402 and 404 may corresponding to a plating technique (e.g., an entrapment technique or electroplating technique).

Application of a source of heat to the composite (e.g., the combination of the plated powder on the base material) in step 406 may be included as part of the technique/method 400. Application of the source of heat in step 406 may cause the method 400 to take-on characteristics of brazing or welding, which is to say that plating techniques may be combined with aspects of brazing or welding in some embodiments. In some embodiments, the application of heat in step 406 may facilitate diffusion binding to a base material or base alloy.

In step 408, one or more coatings are applied. For example, one or more coatings may be applied to a component, such as a blade 206. The coatings may include an environmental coating.

The steps associated with the method 400 may be executed in an order or sequence that is different from what is shown in FIG. 4. In some embodiments, one or more of the steps may be optional. In some embodiments, additional steps not shown may be included.

The method 400 may be performed in accordance with scheduled or periodic engine service. The method 400 may be performed as part of unscheduled engine service.

Technical effects and benefits of this disclosure include an enhanced maintenance/repair technique that does not require shroud faces of a blade to be welded. Accordingly, the structural strength/integrity of a base metal associated with the blade may be maintained. A plating material that is used may be compatible with coatings that may be applied to the blade and may minimize/reduce the impact of environmental factors (e.g., temperature, humidity, etc.) on the blade.

Aspects of the disclosure have been described in terms of illustrative embodiments thereof. Numerous other embodiments, modifications, and variations within the scope of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional in accordance with aspects of the disclosure. One or more features described in connection with a first embodiment may be combined with one or more features of one or more additional embodiments.

## Claims

1. A method comprising:
applying a plating solution to a base material of a notch (210) associated with a shroud section (208-1) of a turbine blade (208); and
applying an electrical signal to the plating solution to cause a deposition of material onto the base material to form a composite.

2. The method of claim 1, wherein the notch (210) is substantially z-shaped.

3. The method of claim 1 or 2, further comprising:
applying a source of heat to the composite to facilitate diffusion binding to the base material.

4. The method of claim 1, 2 or 3 further comprising:
applying a coating to the turbine blade (208).

5. The method of any preceding claim, wherein the method is performed as part of a scheduled engine service.

6. The method of any preceding claim, wherein the method is performed to restore material associated with the notch (210) due to wear.

7. The method of any preceding claim, wherein less than 0.020 inches (0.05 cm) of material is deposited onto the base material.

8. The method of any preceding claim, wherein the turbine blade (208) is associated with a low pressure turbine section (218) of a turbine (21) of an aircraft engine (10).

9. A shroud section associated with a turbine blade (208), comprising:
a composite material deposited onto a base material of a notch (210) of the shroud section (208-1) based on an application of an electrical signal to a plating solution.

10. The method of any of claims 1-8, or the shroud section of claim 9, wherein the notch (210) is substantially z-shaped.

11. The method of any of claims 1-8, or the shroud section of claim 9 or 10, wherein the notch (210) is composed of a center segment and two outer segments.

12. The method of any of claims 1-8, or the shroud section of claim 9, 10 or 11, wherein the solution comprises a nickel-cobalt matrix.

13. The method of any of claims 1-8, or the shroud section of any of claims 9 to 12, wherein the solution comprises a powder.

14. The method or shroud section of claim 13, wherein the powder is less than twenty-two microns in dimension.

15. The method or shroud section of claim 13 or 14, wherein the powder is of the base material.
